# EUROPEAN PATENT APPLICATION

(11) **EP 4 668 387 A1**
(43) Date of publication of application: **24.12.2025**
(21) Application number: 24901010.9
(22) Date of filing: 03.12.2024
(51) Int. Cl.: H01M 10/04, H01M 10/48

(54) **APPARATUS FOR ACTIVATING BATTERY CELL AND METHOD FOR ACTIVATING BATTERY CELL USING SAME**

(30) Priority: 07.12.2023 KR 20230176240
(71) Applicant: LG Energy Solution, Ltd., Seoul 07335 (KR)
(72) Inventor: LEE, Han Jin, Daejeon 34122 (KR); JANG, Min Young, Daejeon 34122 (KR); DONG, Han Sae, Daejeon 34122 (KR); LIM, Dae Bong, Daejeon 34122 (KR)
(74) Representative: Goddar, Heinz J.
(86) International application number: PCT/KR2024/019527
(87) International publication number: WO 2025/121824

(57) **Abstract**

Example embodiments of the present technology provide a battery cell formation device. The battery cell formation device includes a driving part including a driving plate and driving rods configured to move the driving plate in a first direction and a support part including a support plate and elastic elements connected to the support plate, in which the support plate is spaced apart from the driving plate in the first direction and includes protrusions protruding in the first direction.

## Description

### [Technical Field]

The present invention relates to a battery cell formation device and a battery cell formation method using the same. The present application claims the benefit of priority based on Korean Patent Application No. 10-2023-0176240, filed on December 7, 2023, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

The manufacture of a secondary battery includes an electrode process including mixing, coating, roll pressing, slitting, and notching processes, an assembly process of embedding an electrode assembly into a case, and a formation process of electrically activating and stabilizing battery cells. After the formation process, the battery cells may be stacked to form a cell stack. The cell stack may be mounted in a housing together with a module frame or be mounted directly in the housing without the module frame.

### [Disclosure]

### [Technical Problem]

The present invention is directed to providing a battery cell formation device with improved reliability and a battery cell formation method using the same.

### [Technical Solution]

Example embodiments of the present invention provide a battery cell formation device. The battery cell formation device includes: a driving part including a driving plate and driving rods configured to move the driving plate in a first direction; a support part including a support plate, which is spaced apart from the driving plate in the first direction, and elastic elements connected to the support plate; and a plurality of press plates provided between the driving part and the support plate and configured to press a plurality of battery cells, and the support plate includes protrusions protruding in the first direction.

A height of each of the protrusions in the first direction may be in a range of 0.1 mm to 1.0 mm.

The height of each of the protrusions in the first direction may be 0.6 mm or less.

Each of the protrusions may include the same material as the support plate.

Each of the protrusions may include a material different from a material of the support plate.

The protrusions may be spaced apart from a center of the support plate.

The protrusions may be spaced apart from each other in a second direction parallel to the support plate and be spaced apart from a center of the support plate in the second direction.

Distances between ends of the support plate in the second direction and the protrusions may be different from a distance between the protrusions and the center of the support plate in the second direction.

The distances between ends of the support plate in the second direction and the protrusions may be less than the distance between the protrusions and the center of the support plate in the second direction.

Each of the press plates may have a flat plate shape.

Each of the press plates may not include a protrusion.

A surface of each of the press plates may have a shape different from a shape of a surface of the support plate.

Example embodiments provide a formation method of a secondary battery. The formation method includes loading a plurality of pieces of pressure-sensitive paper and a plurality of battery cells onto a battery cell formation device, performing a formation process on the plurality of battery cells, and evaluating the formation process of the plurality of battery cells, based on the plurality of pieces of pressure-sensitive paper, in which the battery cell formation device a driving part including a driving plate and driving rods configured to move the driving plate in a first direction, and a support part including a support plate and elastic elements connected to the support plate, the support plate is spaced apart from the driving plate in the first direction and includes protrusions protruding in the first direction.

The evaluating of the formation process may be performed based on a standard deviation of pressure sensed using the plurality of pieces of pressure-sensitive paper.

### [Advantageous Effects]

A battery cell formation device according to example embodiments of the present invention includes a support plate with a protrusion. Accordingly, battery cells can be uniformly pressed during a formation process and reliability in manufacturing a secondary battery can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a plan view of a battery cell formation device according to example embodiments.
FIG. 2 is a partial plan view of a battery cell formation device according to example embodiments.
FIG. 3 is a flowchart of a secondary battery manufacturing method according to example embodiments.
FIG. 4 illustrates pressure-sensitive paper according to example embodiments.
FIG. 5 illustrates pressure-sensitive paper according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

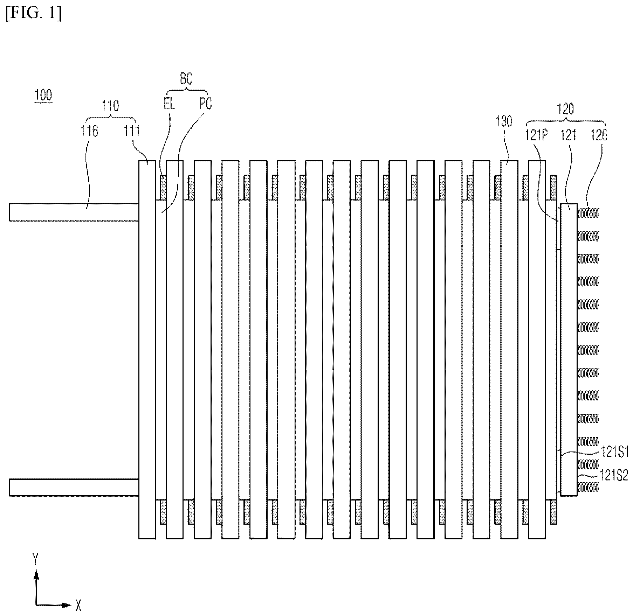

FIG. 1 is a perspective view of a battery cell formation device 100 according to example embodiments.

Referring to FIG. 1, the battery cell formation device 100 may include a driving part 110, a support part 120, and a plurality of press plates 130.

According to example embodiments, the battery cell formation device 100 may be configured to perform a formation process of battery cells BC. Here, the formation process of the battery cells BC may include repeatedly performing aging, charging, and discharging of the battery cells BC.

As an electrolyte is decomposed due to repetition of charging and discharging, a solid electrolyte interphase (SEI) film may be formed on a surface of a negative electrode. The SEI film is a thin film generated on a surface of a negative electrode material when the battery cells BC are charged for the first time after the manufacture of the battery cells BC. When the battery cells BC are charged, lithium ions in the battery cells BC may move to the negative electrode, and the SEI film may be formed on the surface of the negative electrode material due to a chemical reaction occurring when materials in an electrolyte are electrolyzed for the first time during the movement of the lithium ions. The SEI film may be a type of a separator. The SEI film may prevent additional decomposition reaction of the electrolyte when the lithium ions move from a positive electrode to the negative electrode for charging of a battery.

In the aging process, the battery cells BC may be stored at room temperature for a certain time (30 minutes to 3 hours as a non-limiting example) to stabilize the battery cells BC when charged or discharged. A key to the aging process is to uniformly disperse the electrolyte in a pouch cell so that the electrolyte may uniformly permeate both the positive electrode and the negative electrode. Through the aging process, the mobility of lithium ions may be improved, and the uniformity (for example, thickness uniformity) of the SEI film may be improved.

The formation process of the battery cells BC may include performing degassing to remove a gas generated in the battery during aging and charging. A gas may be generated in the battery cells BC during charging/discharging and the aging process. In a degassing process, the gas in the battery cells BC may be removed.

While the battery cells BC are charged and discharged, the battery cells BC may be pressed by the press plates. By uniformly pressing the battery cells BC, gas trap and lithium plating can be prevented and the uniformity of the SEI film can be improved. The battery cells including a uniform SEI film may have a relatively short charging or discharging time.

The battery cells BC are basic units of a lithium ion battery, that is, a secondary battery. The battery cells BC may be pouch type battery cells. The battery cells BC may include a pouch case PC and an electrode assembly in the pouch case PC. The electrode assembly in the pouch case PC includes a positive electrode, a negative electrode, and a separator between the positive electrode and the negative electrode. Positive electrodes may include a positive electrode tab connected to one of electrode leads EL, and negative electrodes may include a negative electrode tab connected to one of the other electrode leads EL.

The pouch case PC may be provided by performing a forming process and a sealing process on a pouch film. The pouch film may include an inner resin layer, a metal layer, and an outer resin layer. The inner resin layer may have thermal adhesive properties, thus allowing sealing of the pouch film. The inner resin layer may include, for example, a polyolefin-based material. The metal layer may include an alloy of iron, carbon, chromium and manganese, an alloy of iron, chromium and nickel, or aluminum.

The electrode assembly may be, but is not limited to, a jelly-roll type electrode assembly or a stack type electrode assembly. The jelly-roll type electrode assembly includes a positive electrode and a negative electrode that are wound, and a separator interposed therebetween. A stack type electrode assembly may include a plurality of positive electrodes and a plurality of negative electrodes that are stacked sequentially, and a plurality of separators interposed therebetween. The battery cells BC of FIG. 1 may be a product obtained before performing the formation process after a pouch forming process and an electrolyte injection process.

The positive electrode may include a positive electrode current collector and a positive electrode active material. The negative electrode may include a negative electrode current collector and a negative electrode active material.

A thickness of the positive electrode current collector may range from about 3 µm to about 500 µm. The positive electrode current collector may not cause a chemical change in a finally manufactured secondary battery and may have high conductivity. The positive electrode current collector may include, for example, stainless steel, nickel, titanium, baked carbon, and aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of film, sheet, foil, net, porosity, foam, nonwoven fabric or the like.

A thickness of the negative electrode current collector may be in a range of about 3 µm to about 500 µm. The negative electrode current collector may not cause a chemical change in a finally manufactured secondary battery and may have high conductivity. The negative electrode current collector may include stainless steel, aluminum, nickel, titanium, baked carbon, and aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of film, sheet, foil, net, porosity, foam, nonwoven fabric or the like.

The positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}Co_{1/3}Mn_{1/3}O₂ or Li_{1+zN}i_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, or tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

According to example embodiments, the driving part 110 may include a driving plate 111 and driving rods 116. The driving rods 116 may be configured to transfer an external driving force to the driving plate 111. The driving rods 116 may be connected to, for example, a hydraulic cylinder or a linear servo motor. The driving plate 111 may have a approximately flat plate shape. The driving plate 111 may be substantially perpendicular to an X-axis direction. The driving plate 111 may be substantially parallel to a Y-axis direction. The driving rods 116 may be configured to move the driving plate 111 in the X-axis direction.

The support part 120 may include a support plate 121 and elastic elements 126. The support plate 121 may be spaced apart from the driving plate 111 in the X-axis direction. The support plate 121 may be substantially parallel to the driving plate 111. The support plate 121 may be substantially parallel to the Y-axis direction. The support plate 121 may be substantially perpendicular to the X-axis direction.

The elastic elements 126 may be coupled to a second surface 121S2 of the support plate 121. An axis of an elastic force of the elastic elements 126 may be substantially parallel to the X-axis direction. That is, each of the elastic elements 126 may apply the elastic force in the X-axis direction, which is proportional to a displacement in the X-axis direction, to the support plate 121. An appropriate pressure may be applied to the battery cells BC by each of the elastic elements 126. The elastic elements 126 may be directly or indirectly connected to a sensor such as a load cell, and a pressure to be applied to the battery cells BC may be controlled based on the elastic force of the elastic elements 126.

The support plate 121 may include steps 121P. Each of the steps 121P may be spaced apart from a center of the support plate 121 (more specifically, a center of the support plate 121 in the Y-axis direction). Each of the steps 121P may be on an edge of the support plate 121. Each of the steps 121P may be closer to ends of the support plate 121 in the Y-axis direction than to the center of the support plate 121 in the Y-axis direction.

A distance between the ends of the support plate 121 in the Y-axis direction and the steps 121P may be different from a distance between the center of the support plate 121 in the Y-axis direction and the steps 121P. The distance between the ends of the support plate 121 in the Y-axis direction and the steps 121P may be less than the distance between the center of the support plate 121 in the Y-axis direction and the steps 121P.

A distance between the steps 121P and an end of the support plate 121 close to the steps 121P among the ends of the support plate 121 in the Y-axis direction may be different from the distance between the steps 121P and the center of the support plate 121 in the Y-axis direction. The distance between the steps 121P and the end of the support plate 121 close to the steps 121P among the ends of the support plate 121 in the Y-axis direction may be less than the distance between the steps 121P and the center of the support plate 121 in the Y-axis direction.

The steps 121P may protrude from a first surface 121S1 of the support plate 121 in the X-axis direction. The first surface 121S1 of the support plate 121 may face the driving plate 111. The first surface 121S1 of the support plate 121 may face the press plates 130. Accordingly, the steps 121P may be configured to press an edge of the battery cell BC between the support plate 121 and the press plates 130 (i.e., the battery cell BC in contact with the press plate 130).

According to example embodiments, each of the steps 121P may include the same material as the support plate 121. For example, each of the steps 121P may be consecutive elements integrally formed with the support plate 121. For example, each of the steps 121P may include aluminum. As another example, the steps 121P may include a material with lower hardness than the support plate 121. The support plate 121P may be a silicon pad. For example, each of the steps 121P may include silicon.

During the formation process, the battery cells BC are uniformly pressed to suppresses lithium plating and thus the uniform pressurization of the battery cells BC is one of key factors in performance management of the battery cells BC. Pressure applied to battery cells BC adjacent to the support plate 121 may be relatively non-uniform, compared to pressure applied to battery cells BC adjacent to the driving plate 111. Accordingly, pressure applied to edges of the battery cells BC by the support plate 121 may be lower than pressure applied to the center of the battery cells BC by the support plate 121. According to example embodiments, due to the steps 121P protruding from the edge of the support plate 121, the battery cells BCs in contact with the support plate 121 may be uniformly pressed and thus the reliability of manufacturing a secondary battery may be improved.

According to example embodiments, a height 122H of each of the steps 121P may be in a range of about 0.1 mm to about 1 cm. According to example embodiments, the height 122H of each of the steps 121P may be about 0.2 mm or more. According to example embodiments, the height 122H of each of the steps 121P may be about 0.3 mm or more. According to example embodiments, the height 122H of each of the steps 121P may be about 0.4 mm or more. According to example embodiments, the height 122H of each of the steps 121P may be about 0.9 mm or less. According to example embodiments, the height 122H of each of the steps 121P may be about 0.8 mm or less. According to example embodiments, the height 122H of each of the steps 121P may be about 0.7 mm or less. According to example embodiments, the height 122H of each of the steps 121P may be about 0.6 mm or less.

Here, the Y-axis direction may be a direction in which the pouch case PC of the battery cells BC extends. A main surface of the pouch case PC of the battery cells BC may be substantially parallel to the Y-axis direction and be substantially perpendicular to the X-axis direction. The electrode leads EL of the battery cells BC may be spaced apart from each other in the Y-axis direction but are not limited thereto.

According to example embodiments, the press plates 130 may be interposed between the driving plate 111 and the support plate 121. Each of the press plates 130 may be substantially parallel to the driving plate 111. Each of the press plates 130 may be substantially perpendicular to the X-axis direction. Each of the press plates 130 may be substantially perpendicular to the X-axis direction.

Each of the press plates 130 may be coupled to a shaft extending in the X-axis direction. Accordingly, the press plates 130 may be moved along the shaft when driven by the driving plate 111. The plurality of battery cells BC may be inserted between the press plates 130 and be pressed by the press plates 130, the driving plate 111, and the support plate 121.

Each of the press plates 130 may have a approximately flat plate shape. Accordingly, each of the press plates 130 may not include a step. Both main surfaces of each of the press plates 130 may be different from the first surface 121S1 of the support plate 121.

The battery cell formation device 100 may further include charging terminals configured to be electrically connected to the electrode leads EL of the plurality of battery cells BC. The charging terminals may be in contact with the electrode leads EL of the plurality of battery cells BC. The charging terminals may be configured to transmit external power to the plurality of battery cells BC.

### (Second Embodiment)

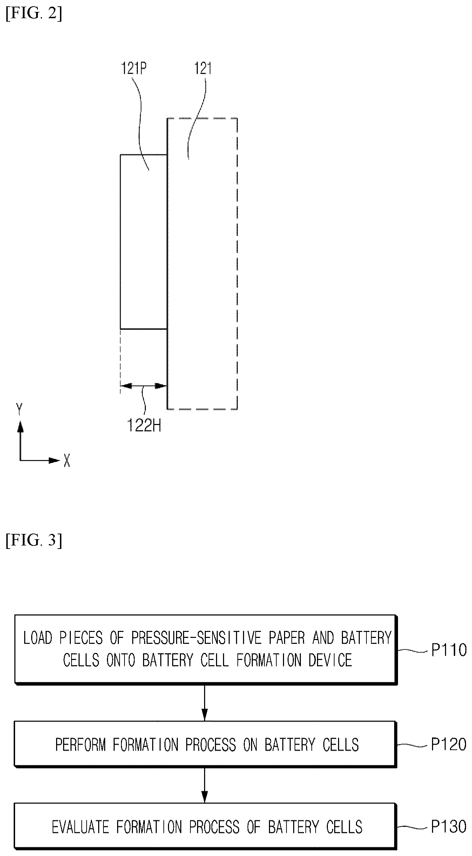

FIG. 3 is a flowchart of a secondary battery manufacturing method according to example embodiments.

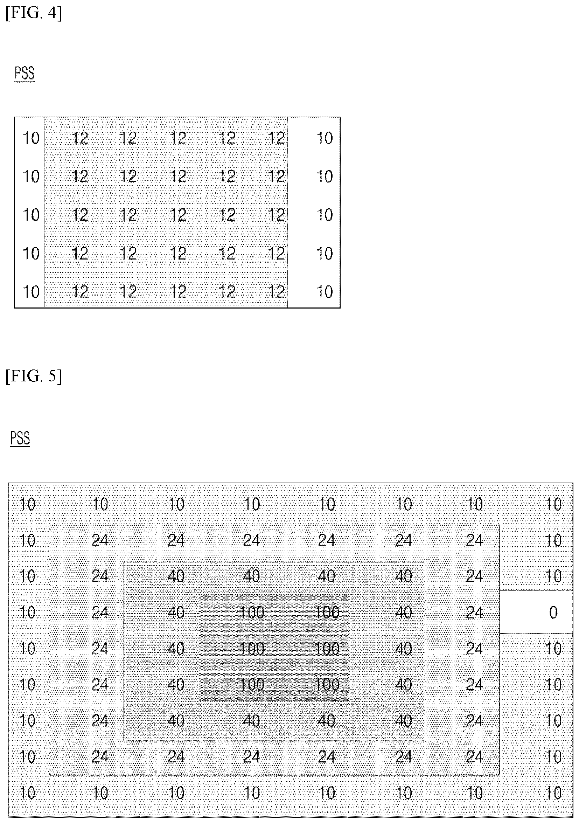

FIG. 4 illustrates pressure-sensitive paper according to example embodiments.

FIG. 5 illustrates pressure-sensitive paper according to example embodiments.

Referring to FIGS. 3 to 5, in P110, a plurality of pieces of pressure-sensitive paper PSS and battery cells BC may be loaded onto the battery cell formation device 100. The loading of the battery cells BC may be performed by a pick-and-place machine.

The pressure-sensitive paper PSS may include a microcapsule containing a dye. When pressure is applied to the pressure-sensitive paper PSS, the dye contained in the microcapsule of the pressure-sensitive paper PSS may be released due to the pressure, and a character or color may be displayed on the pressure-sensitive paper PSS due to a reaction between the dye and a developer on a surface of the pressure-sensitive paper PSS. As shown in FIGS. 4 and 5, the pressure-sensitive paper PSS may display both or one of a color and a character indicating the pressure applied thereto.

Next, in P120, the formation process may be performed on the plurality of battery cells BC. As described above, the formation process of the plurality of battery cells BC may include charging/discharging and aging processes.

Next, in P130, the formation process of the plurality of battery cells BC may be evaluated. The formation process of the plurality of battery cells BC may be evaluated based on the plurality of pieces of pressure-sensitive paper PSS. While the plurality of battery cells BCs are processed, the plurality of pieces of pressure-sensitive paper PSS may be pressed together with the plurality of battery cells BCs. Thus, after the formation process is completed, each of the plurality of pieces of pressure-sensitive papers PSS may indicate pressure applied to a surface of a corresponding one of the plurality of battery cells BC. For example, the pressure-sensitive paper PSS of FIG. 4 shows an even pressure distribution compared to the pressure-sensitive paper PSS of FIG. 5 and thus it is desirable to process a battery cell BC corresponding to the pressure-sensitive paper PSS of FIG. 5 compared to battery cell BC corresponding to the pressure-sensitive paper PSS of FIG. 4.

According to example embodiments, the evaluation of the formation process may include an evaluation when uniform pressure is applied to the plurality of battery cells BC. According to example embodiments, the evaluation of the formation process may be based on a standard deviation of readings of the pressure-sensitive paper PSS. According to example embodiments, the evaluation of the activation process may include comparing the standard deviation of the readings of the pressure-sensitive paper PSS with a critical standard deviation. For example, the resulting battery cell BC of the formation process may be determined to be good-quality products when the standard deviation of the readings of the pressure-sensitive paper PSS is less than or equal to the critical standard deviation and be determined to be defective when the standard deviation of the readings of the pressure-sensitive paper PSS is greater than the critical standard deviation.

Based on the above description, those of ordinary skill in the art will be able to easily derive an embodiment in which the pressure-sensitive paper PSS is provided only on the battery cell BC between the support plate 121 and the press plate 130.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery cell formation device comprising:
a driving part including a driving plate and driving rods configured to move the driving plate in a first direction;
a support part including a support plate and elastic elements connected to the support plate, wherein the support plate is spaced apart from the driving plate in the first direction; and
a plurality of press plates provided between the driving part and the support plate and configured to press a plurality of battery cells,
wherein the support plate comprises protrusions protruding in the first direction.

2. The battery cell formation device of claim 1, wherein a height of each of the protrusions in the first direction is in a range of 0.1 mm to 1.0 mm.

3. The battery cell formation device of claim 1, wherein a height of each of the protrusions in the first direction is 0.6 mm or less.

4. The battery cell formation device of claim 1, wherein each of the protrusions comprises the same material as the support plate.

5. The battery cell formation device of claim 1, wherein each of the protrusions comprises a material different from a material of the support plate.

6. The battery cell formation device of claim 1, wherein the protrusions are spaced apart from a center of the support plate.

7. The battery cell formation device of claim 1, wherein the protrusions are spaced apart from each other in a second direction parallel to the support plate, and
the protrusions are spaced apart from a center of the support plate in the second direction.

8. The battery cell formation device of claim 7, wherein distances between ends of the support plate in the second direction and the protrusions are different from a distance between the protrusions and the center of the support plate in the second direction.

9. The battery cell formation device of claim 7, wherein distances between ends of the support plate in the second direction and the protrusions are less than a distance between the protrusions and the center of the support plate in the second direction.

10. The battery cell formation device of claim 1, wherein each of the press plates has a flat plate shape.

11. The battery cell formation device of claim 1, wherein each of the press plates does not include a protrusion.

12. The battery cell formation device of claim 1, wherein a surface of each of the press plates has a shape different from a shape of a surface of the support plate.

13. A formation method of a secondary battery, comprising:
loading a plurality of pieces of pressure-sensitive paper and a plurality of battery cells onto a battery cell formation device;
performing a formation process on the plurality of battery cells; and
evaluating the formation process of the plurality of battery cells, based on the plurality of pieces of pressure-sensitive paper,
wherein the battery cell formation device a driving part including a driving plate and driving rods configured to move the driving plate in a first direction, and a support part including a support plate and elastic elements connected to the support plate,
wherein the support plate is spaced apart from the driving plate in the first direction, and
the support plate comprises protrusions protruding in the first direction.

14. The formation method of claim 13, wherein the evaluating of the formation process is performed based on a standard deviation of pressure sensed using the plurality of pieces of pressure-sensitive paper.
